# EUROPEAN PATENT SPECIFICATION

(11) **EP 2 324 655 B1**
(45) Date of publication and mention of the grant of the patent: **25.02.2015**
(21) Application number: 09776461.7
(22) Date of filing: 20.03.2009
(51) Int. Cl.: H04W 24/02

(54) **METHOD FOR CONFIGURATION OF A FEMTO RADIO BASE STATION**
VERFAHREN ZUR KONFIGURIERUNG EINER FEMTO-FUNKBASISSTATION
PROCÉDÉ DE CONFIGURATION D'UNE STATION DE BASE RADIO FEMTO

(30) Priority: 09.09.2008 EP 08015825
(43) Date of publication of application: 25.05.2011
(73) Proprietor: NEC Europe Ltd., 69115 Heidelberg (DE)
(72) Inventor: LUNDQVIST, Henrik, 80638 München (DE); BRUNNER, Marcus, 69181 Leimen (DE)
(74) Representative: Ullrich & Naumann
(86) International application number: PCT/EP2009/002084
(87) International publication number: WO 2010/028702

(56) References cited:
- EP-A- 1 699 173
- WO-A-2008/008452
- US-A1- 2007 097 939
- US-A1- 2007 254 620
- HUAWEI: "Self-configuration considerations of Home NodeB" 3GPP DRAFT; R3-071466 SELF-CONFIGURATION CONSIDERATIONS OF HOME NODEB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20070820, 15 August 2007 (2007-08-15), XP050162291
- AIRVANA: "Femtocells: Transforming The Indoor Experience"[Online] 16 October 2007 (2007-10-16), pages 1-11, XP002533398 Retrieved from the Internet: URL:http://www.airvana.com/files/Airvana_F emtocell_White_Paper_Oct_2007.pdf> [retrieved on 2009-06-18] cited in the application
- NORTEL: "UE assisted localization of home cells" 3GPP DRAFT; R4-071461, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Athens, Greece; 20070820, 23 August 2007 (2007-08-23), XP050177903 cited in the application

## Description

The present invention relates to a method for configuration of a femto radio base station, comprising: establishing a connection of said femto radio base station to a configuration server via the internet, positioning a mobile terminal within the transmission range of said femto radio base station, said mobile terminal contacting said configuration server over an existing macro base station and performing various measurements to identify the radio environment at the site of said femto radio base station, and said configuration server using the results from said measurements to determine a radio configuration for said femto radio base station.

There is currently an interest from mobile network operators to deploy so called femto-cells (also known as home base stations, home BTS, picocells, homeNBs, or femto radio base stations) which would be installed within the homes of the operators' customers (see for reference Airvana whitepaper, "Femtocells: Transforming The Indoor Experience"). Installation of home BTSs will typically be handled by the customers themselves without any technical training, therefore it has to be a simple plug-and-play procedure. Such home base stations are connected to a normal broadband internet connection, similar to a WiFi base station, but the radio interface is based on wide area cellular network standards such as WiMAX (Worldwide Interoperability for Microwave Access), UMTS (Universal Mobile Telecommunications System) or 3GPP LTE (Long Term Evolution).

Since home BTSs are normally deployed in the same licensed spectrum as the wide area network of the operator it is important to configure the radio interface correctly to avoid interference with other base stations. It is also necessary to prevent the home BTS from being deployed in an area where the operator does not have a license to use the spectrum, at least if the spectrum is used for other purposes, or where it can interfere with the networks of other operators, for example in another country (see for reference Nortel, "UE assisted localization of home cells", 3GPP, R4-071461, August 2007).

US 2007/0097939 A1 describes a method for automatic configuration of a femto radio base station. The femto radio base station includes a macro receiver to acquire detected coverage information of a radio access network. In other words, the home base station is equipped with special built-in functionality for radio condition detection in its environment. A control node of the radio access network, to which the detected radio coverage information is transmitted, determines the home base station's operation parameters and communicates these parameters to the station. Disadvantageously, provision of a dedicated built-in macro receiver results in enhanced costs of the femto radio base stations.

The document by Huawei: "Self-configuration considerations of Home NodeB", 3GPP Draft, R3-071466, vol. RAN WG3 Meeting #57, Athens, Greece, August 15, 2007 discloses two different methods for self-configuration of a femto radio base station (Home NodeB, HNB). In the first one, the HNB performs downlink detection of real-time radio conditions, whereas in the second one the self-configuration of HNB is performed without downlink detection. In this case, HNB learns about the radio environment based on UE measurements. A testing call is used for the network to trigger the UE measurements, and the HNB or the network determines the radio parameters according to the received measurement reports.

In view of the above it is an object of the present invention to improve and further develop a method for configuration of a femto radio base station in such a way that, by employing cost-effective mechanisms that are readily to implement, an efficient and reliable configuration is achieved without requirement of any special technical skills on customer side.

In accordance with the invention, the aforementioned object is accomplished by a method comprising the features of claim 1. According to this claim such a method is characterized in that said femto radio base station passively detects the traffic between said mobile terminal and said macro base station by means of its uplink radio interface, informs said configuration server accordingly and identifies said mobile terminal by means of detecting and analyzing signaling information exchanged between said mobile terminal and said macro base station.

According to the invention it has first been recognized that even without any dedicated built-in functionality, e.g. in form of macro receivers, femto radio base stations can be properly configured in an efficient and reliable way. The present invention proposes the deployment of a mobile terminal for identifying properties of the radio environment at the site of the femto radio base station in combination with a technique to reliably identify the mobile terminal or, more specifically, the relation between the mobile terminal and the femto radio base station.

According to the invention a configuration server is provided towards which the femto radio base station establishes a connection via the internet. In a next step a mobile terminal, in particular the mobile terminal owned by the customer who is installing the femto radio base station, is positioned within the transmission range of the femto radio base station and a connection with the configuration server is established over an existing macro base station. For instance via the configuration server the mobile terminal is instructed to perform various measurements that are intended to gain information about the current radio conditions at the site of the femto radio base station, for instance to find out which base stations can possibly interfere with the radio femto base station under configuration.

By means of its uplink radio interface the femto radio base station can passively detect the traffic between the mobile terminal and the macro base station. Informing the configuration server accordingly, the configuration server can use the results from the measurements to determine the radio configuration for the femto radio base station. Consequently, a reliable and efficient configuration of the femto radio base station is guaranteed avoiding both the deployment of any unlicensed frequencies as well as interferences with existing network components. Moreover, the costs of the femto radio base station are reduced compared to using a built-in macro radio receiver. At the same time the installation procedure is simple and can be installed without any special technical skills as the configuration process is not in the sphere of the customer's responsibilities, but is performed remotely via the configuration server.

As what regards the connection to the configuration server, it may be provided that the femto radio base station employs address and security information that may be provided in connection with the delivery of the femto radio base station to a customer. For instance, the customer may be requested to enter a pin code when starting the configuration proceeding.

After the connection to the configuration server has been established, the uplink radio interface of the femto radio base station may be switched on to passively detect traffic. Further, with respect to a high ease of use it may be provided that the customer is informed that the femto radio base station is ready for the next step in the configuration process. For instance, this information may be realized by means of an LED or a sound signal.

The contact between the mobile terminal and the configuration server may be established directly or indirectly. According to a preferred embodiment the user is provided with a specified number or address in connection with the delivery of the femto radio base station. The user may then make a telephone call or initiate a data connection to the specified number or address with his mobile terminal employing the same radio technology as the femto radio base station. The telephone call and/or the initiated data connection may trigger the configuration server to start the configuration process.

Generally, at the setup of the phone call/data connection the femto radio base station will detect a strong radio signal when the mobile terminal is within short distance. Advantageously, several methods may be employed and may be combined with each other with respect of an identification of the mobile terminal and/or the connection between the mobile terminal and the involved macro base station.

In particular, the preferred method/methods may depend on the details of the specific radio standard currently employed. More specifically, it may be provided, for instance, that in connection with the delivery of the femto radio base station to a customer an identification is supplied that is provided to the configuration server, e.g. during initiation of the connection between the mobile terminal and the macro base station. Such method would work in any case and would provide the identification directly to the configuration server. However, the drawbacks are that it would not be sufficiently guaranteed that the mobile terminal is positioned close to the femto radio base station. Moreover, this method would constitute an extra step to be carried out by the user.

Alternatively, the configuration server can be informed beforehand about the identity of the terminal. In this case the configuration procedure can be further simplified for the user that does not need to start any connection/call. Instead the configuration server can initiate the measurements either by initiating the connection or using only signaling traffic to the terminal.

In view of this, as stated above, according to the invention the femto radio base station identifies the mobile terminal by means of detecting and analyzing signaling information exchanged between the mobile terminal and the macro base station. To this end specific traffic/signaling patterns may be generated on the radio interface between the terminal and the macro base station during the measuring process. These patterns may then be reported in detail or as a set of characteristics from the radio base station to the configuration server in order to enable the configuration server to distinguish different setup processes that are ongoing in parallel on different locations. It is to be noted that since the configuration server is controlling the setup process of all femto radio base station installations it will be able to generate patterns that are distinguishable.

Advantageously, the specific traffic/signaling patterns may include paging messages sent to the mobile terminal. Additionally or alternatively, the patterns may include handover patterns, wherein the time instances of each handover of the mobile terminal could be controlled by the configuration server using mobility functionality in the network. According to a still further preferred embodiment recognizable transmission patterns in terms of active and idle transmission periods could be generated. For instance, the mobile terminal may be caused to send acknowledgements to packets that have been sent as a specific pattern having the advantage of being visible regardless of any encryption.

After having identified the mobile terminal, it may be provided that information about the identity of the mobile terminal is sent to the configuration server. Since the configuration server may handle several femto radio base stations simultaneously, this avoids any mix-up and assures a proper configuration of all single femto radio base stations that are handled by the configuration server in parallel. Sending information about the identity of the mobile terminal also prevents users from cheating by making the measurements on a different location.

With respect to an achievement of a set of information as complete as possible it may be provided that the measurements to be performed by the mobile terminal in order to identify the radio environment at the site of the femto radio base station include multiple steps. In particular, the measurements, which are preferably requested by the configuration server, may include a search for neighboring cells. Moreover, the mobile terminal can be forced to make handovers to all different cells that are available in order to measure cell specific information such as cell-IDs. Additionally or alternatively, the radio spectrum may be scanned in order to find out which frequencies are used and which ones are unused. Furthermore, the measurements may include performing a location determination of the mobile terminal, for instance by using GPS (Global Positioning System), triangulation or similar techniques. It is to be understood that the list of specified measurements is not concluding and that a skilled person may perform different kinds of measurements. Moreover, it is important to note that most of the measurements are likely to be available in the radio access standard, but additional measurements specific for home eNB (evolved NodeB) are not ruled out. Such measurements could be employed, for instance, for adapting the power of the femto radio base station on interference estimations using mobile terminal measurements.

In addition to information gathered about macro cells the configuration server may use information about other femto radio base stations that are located in the area. Preferably, it may be provided that the configuration server instructs those other femto radio base stations to perform measurements on the radio signals they receive from the mobile terminal.

The results from the measurements may be used by the configuration server to determine the best radio configuration for the femto radio base station. For example, this determination can be specified based only on the information of which spectrum is used/unused as identified from the measurements or it may be based on information about the network planning of the operator. However, a combination of both methods proofs to be most suitable since that would take into account both the macro cells and neighboring femto radio base stations.

When the configuration parameters for the femto radio base station are transferred to the femto radio base station this is preferably done together with authorization to deploy the downlink interface of the femto radio base station. Since the deployment of the downlink interface is sensitive a two fold security may be established. First, as already mentioned above, a user or a customer should not be allowed to configure the home base station himself, i.e. there is no management interface accessible for the user/customer and only the operator is allowed to configure through a secure channel as described above. Secondly, it should be clear under which operator control the femto radio base station is in order to deal with a liability of misconfigurations.

To avoid manipulations by the user it may be provided that a test connection is established with the mobile terminal after the downlink interface of the femto radio base station has been enabled. Such connection would confirm that the mobile terminal is indeed located close to the femto radio base station. A connection may be achieved, for instance, by a handover or a test call from the network, preferably initiated by the configuration server. Then further testing and configuration of the access control list and/or preferred cell information can be performed.

With respect to the operational phase of the femto radio base station it may be provided that, after initial configuration, the measurements are continued. One reason for the continued measurement procedure during operation may be the detection of radio environment changes. Such changes may occur if the macro cells in the respective area change, if new femto radio base stations are installed in the area or simply if the femto radio base station is moved to a different location. Moreover, further measurements may serve to get a more complete information about the radio environment, e.g. with the mobile terminal being used in different locations within the femto radio base station's coverage area. To this end the user may make calls to the configuration server from his favorite locations in the home. Based on the results of these calls the configuration server might then recommend to place the femto radio base station to a different location within the home in order to achieve best possible overall performance. In particular, since the mobile terminal measurements are made at different positions it will be possible to get a relatively accurate knowledge of the radio environment resulting in minimal interference. Regarding measurements after initial configuration it is important to note, that the mobile terminal can initially connect to the radio femto base station. Hence, there is no need for the procedures to passively identify the mobile terminal measurements with a specific femto radio base station. However, the configuration server can still be used to control the measurement process.

According to a specific embodiment the femto radio base station may be reused for different users/customers. This requires a procedure to just check the availability of the femto radio base station in the neighborhood. However, this is complicated by the access restrictions that are usually applied at a home BTS (typically in form of closed subscriber groups) and that prevent direct communication between the home BTS and a terminal. A solution would be making a phone call to the operator's configuration server, which might again be detected by the femto radio base station. The configuration server would then use the femto radio base station to measure that the user's terminal, which is employed for making the phone call, is within the radio coverage of the femto radio base station (even though the terminal may not be able to connect directly to the femto radio base station due to access restrictions). This would signal the operator that the new user does not require a new femto radio base station but can use the already existing one. The new user may then by authenticated by the operator to run calls over that existing femto radio base station.

Moreover, there are a set of environments and situations where it might make sense to have several operators sharing the femto radio base station. For example, when a femto radio base station of one operator is deployed in the neighborhood, there is no need for another operator deploying a femto radio base station himself, but might reuse the existing one. In such case the radio environment can be checked employing a mobile terminal as described above and detecting femto radio base stations from different operators (than the mobile terminal is from). The configuration server of the mobile terminal operator can be called, and information about the femto radio base station usable for another operator can be transmitted. Depending on the settlement/homeBTS roaming agreements, the specific femto radio base station can configure to allow connections into another operator's network, in particular by configuring the data plane connectivity into the second operator's network. However, it is to be noted that although the femto radio base station is then shared by several (at least two) operators, it is still under control of a single operator.

In this connection a typical scenario would be when a household with several persons has subscriptions with different mobile operators. They may still all want to benefit from a single femto radio base station. It is possible that the information a user equipment UE or (mobile) terminal can get from the femto radio base station of another operator is not sufficient to unambiguously identify it, for instance when there are many femto radio base stations and the address space is limited so that there are several candidate femto radio base stations that match the address visible from a non-connected UE/terminal. Therefore, the configuration server of the UE/terminal operator may contact the configuration server of the femto radio base station's operator and the latter may detect which of the candidate femto radio base stations is actually close to the UE/terminal by activating the uplink observation for all of the candidates. The candidates could for example be characterized by having the same physical level identity and being in the same macro cell or location area.

There are several ways how to design and further develop the teaching of the present invention in an advantageous way. To this end, it is to be referred to the patent claims subordinate to patent claim 1 and to the following explanation of preferred examples of embodiments of the invention, illustrated by the figures. In connection with the explanation of the preferred examples of embodiments of the invention by the aid of the figures, generally preferred embodiments and further developments of the teaching will be explained.

In the drawings:
- Fig. 1: shows a general application scenario of a method for configuring a femto radio base station according to a first embodiment of the present invention, and
- Fig. 2: illustrates the process of passive terminal identification by means of a packet position modulation for application in a method according to the present invention.

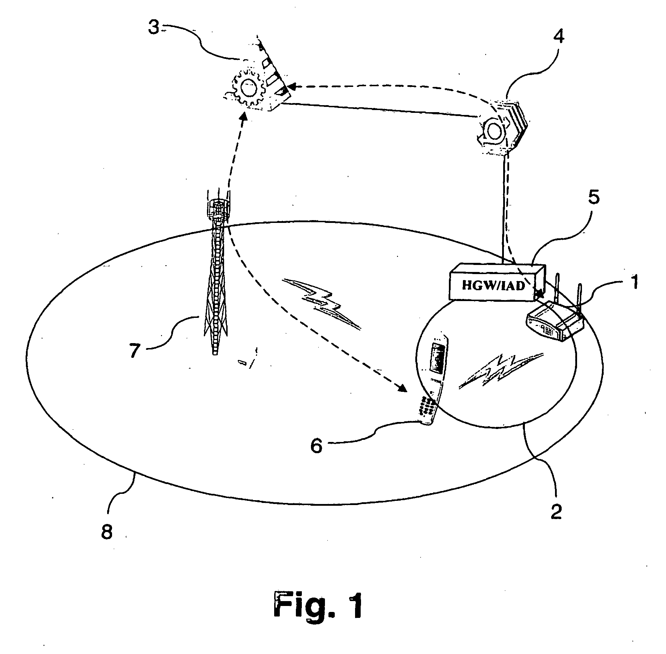

With reference to Fig. 1, a radio femto base station 1 is shown, the coverage area of which is schematically indicated by means of elliptic line 2. It is assumed that the femto radio base station 1 has been acquired by a customer from his mobile network operator and that the radio femto base station 1 has been installed in the customer's home. In the following the configuration procedure of the femto radio base station 1 is described in some more detail.

After being installed by way of a simple plug-and-play procedure in the customer's home, the femto radio base station 1 automatically connects via the internet to a configuration server 3 thereby using address and security information provided at the delivery. In Fig. 1 the physical connection between the femto radio base station 1 and the configuration server 3 is indicated by a solid line, whereas the dashed lines indicate a logical connection. In the specific case illustrated in Fig. 1 the femto radio base station 1 and the configuration server 3 are connected with each other via a home BTS gateway 4, which is located in the backbone network of the mobile operator. At the customer side the connection further includes a HGW/IAD 5 (Home Gateway/Integrated Access Device), which might be a DSL modem, e.g. with integrated firewall functionality. Although shown as separate building block in Fig. 1, HGW/IAD 5 may be integrated into the femto radio base station 1.

After the connection to the configuration server 3 has been established, the uplink radio interface of the femto radio base station 1 is switched on to passively observe traffic. The user is informed that the femto radio base station 1 is now ready for the next step in the configuration process, for example by a light (e.g. LED) or a sound signal.

In a next step the user is requested to make a telephone call or to initiate a data connection to a specified number or address that might be transferred to the customer together with the femto radio base station 1. The telephone call/data connection is established using a mobile terminal 6 of the same radio technology as the femto radio base station 1. As can be obtained from Fig. 1, although mobile terminal 6 is within the coverage area 2 of the femto radio base station 1, the connection is made over an established macro base station 7 since the femto radio base station 1 does not have an active downlink interface yet. The macro cell's 7 coverage area 8 is again schematically indicated by an ellipse. The provided phone number/address triggers the configuration server 3 to start the configuration process.

At the setup of the phone call/data connection the femto radio base station 1 detects a strong radio signal since the mobile terminal 6 is within short distance. It is to be noted that the mobile terminal 6 has to be located both in the coverage area 2 of the femto radio base station 1 as well as in the coverage area 8 of the macro base station 7. Using the received radio signal together with information supplied by the configuration server 3 the femto radio base station 1 identifies the connection between the mobile terminal 3 and the macro base station 7. To allow for a distinct and unambiguous identification of the mobile terminal 6, specific traffic/signaling patterns are generated on the radio interface between mobile terminal 6 and macro base station 7.

The configuration server 3 requests the mobile terminal 6 to perform various measurements aiming at identifying the radio environment at the site of the femto radio base station 1. For instance, the mobile terminal 6 may be obliged to make handovers to different cells or to scan the radio spectrum in order to find out which frequencies are used and which once are unused. Based on the results of the measurements the configuration server 3 determines adapted operation parameters for the femto radio base station 1 and forwards the settings to the station 1 via the established connection.

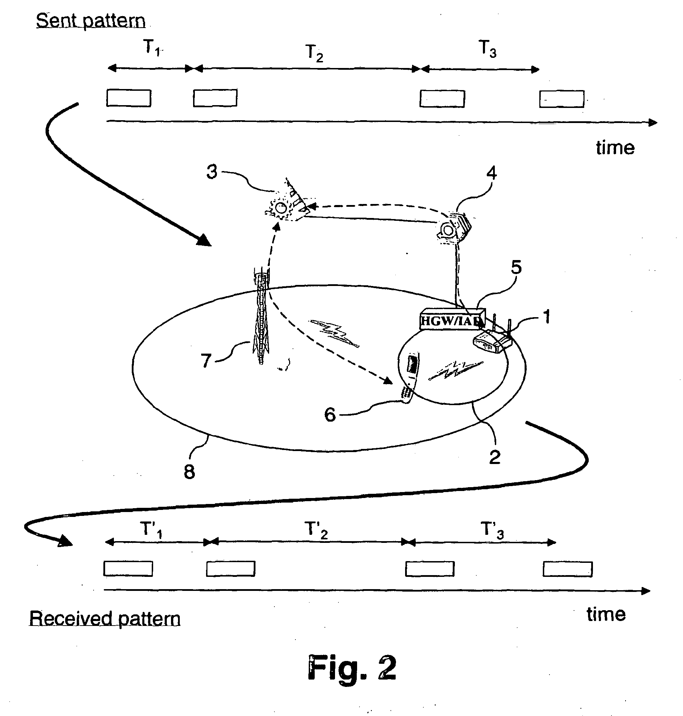

Exemplarily, Fig. 2 illustrates a process for passive identification of the mobile terminal 6 by the femto radio base station 1. Like numerals are used for like components with respect to the embodiment of Fig. 1 and their detailed explanation is omitted.

The steps to be performed by the mobile terminal 6 include sending signaling messages according to a specific time pattern. More specifically, subsequent time intervals T₁, T₂, T₃, etc., with specified time lengths are defined. Packets are sent at the beginning of each time interval. By defining different time lengths for the time intervals, a distinguishable pattern can be easily achieved. At the femto radio base station 1 the packets are received at the beginning of corresponding time intervals T'₁, T'₂, T'₃. These may differ from T₁, T₂, T₃ due to random delays in the network, but suitably chosen sending patterns will still be possible to distinguish. Based on information from the configuration server 3 about which specific pattern is used by which mobile terminal, the femto radio base station 1 can easily identify the mobile terminal 6 the received signal are actually originated from.

Another application where this form of signaling can be applied would be self-optimization procedures that require signaling between base stations, for instance for the purpose of interference coordination between the femto radio base station 1 to be configured and other femto radio base stations located in the same area. In particular for eUTRAN (evolved UMTS Terrestrial Radio Access Network) the macro base stations will have a direct interface (called X2) between each other to be used for example for signaling of interference levels; this interface is not likely to be available for home base stations (according to the current discussions in 3GPP). By using the terminal 6 as a proxy for implicit signaling between the femto radio base stations it would be possible to reduce the amount of signaling that would have to go through the home BTS gateway 4. The sending femto radio base station 1 would encode a message using its ability to control the scheduling of transmission times and frequencies in the uplink, i.e. the scheduling of the terminal transmissions. The other femto radio base station/stations would observe the transmissions of the terminal 6 and decode the message that has been encoded in the time and frequency scheduling of the transmissions. This would require agreement of the encoding and maybe some synchronization between the home BTSs which could be provided by the home BTS gateway 4. Since the signaling is using the same wireless channels that are subject to the interference the communication is automatically limited to the affected base stations.

It is to be noted that the described signaling method will be less applicable between macro and home BTSs since for signaling in direction from home BTS to macro BTS the power may be too low and in the other direction there is likely to be many active users which makes it less practical to use specific scheduling patterns.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for configuration of a femto radio base station, comprising:
establishing a connection of said femto radio base station (1) to a configuration server (3) via the internet,
positioning a mobile terminal (6) within the transmission range of said femto radio base station (1),
said mobile terminal (6) contacting said configuration server (1) over an existing macro base station (7) and performing various measurements to identify the radio environment at the site of said femto radio base station (1), and
said configuration server (3) using the results from said measurements to determine a radio configuration for said femto radio base station (1),
**characterized in that** said femto radio base station (1) passively detects the traffic between said mobile terminal (6) and said macro base station (7) by means of its uplink radio interface, informs said configuration server (3) accordingly and identifies said mobile terminal (6) by means of detecting and analyzing signaling information exchanged between said mobile terminal (6) and said macro base station (7).

2. Method according to claim 1, wherein said femto radio base station (1), when connecting to said configuration server (3), employs address and security information provided in connection with the delivery of said femto radio base station (1) to a user.

3. Method according to claim 1 or 2, wherein said mobile terminal (6) makes a phone call or initiates a data connection to a specified number or address.

4. Method according to any of claims 1 to 3, wherein in connection with the delivery of said femto radio base station (1) to a user an identification of said mobile terminal (6) is supplied that is provided to said configuration server (3) during initiation of the connection between said mobile terminal (6) and said macro base station (7).

5. Method according to any of claims 1 to 4, wherein specific traffic/signaling patterns are generated on the uplink and/or downlink radio interface between said mobile terminal (6) and said macro base station (7).

6. Method according to claim 5, wherein said specific traffic/signaling patterns include paging messages sent to said mobile terminal (6), handover patterns, and/or patterns generated in terms of active and idle transmission periods.

7. Method according to any of claims 1 to 6, wherein information about the identity of said mobile terminal (6) is sent to said configuration server (3).

8. Method according to any of claims 1 to 7, wherein said measurements performed by said mobile terminal (6) to identify the radio environment at the site of said femto radio base station (1) include searching for neighboring cells, making handovers to different available radio cells, scanning the radio frequency spectrum, and/or performing a location determination.

9. Method according to any of claims 1 to 8, wherein said configuration server (3) uses information about what other femto radio base stations are located in the area and wherein said configuration server (3) instructs those other femto radio base stations to perform measurements on the signals from said mobile terminal (6).

10. Method according to any of claims 1 to 9, wherein said configuration server (3) determines a suitable radio configuration for said femto radio base station (1) based on information from said measurements regarding unused spectrum and/or based on information about the operator's network planning.

11. Method according to claim 10, wherein said radio configuration is transferred to said femto radio base station (1) together with authorization to deploy the downlink interface.

12. Method according to claim 11, wherein, after enabling of said femto radio base station's (1) downlink interface, a test connection is established with said mobile terminal (6).

13. Method according to any of claims 1 to 12, wherein, after initial configuration, said measurements are continued during the operational phase of said femto radio base station (1).

14. Method according to any of claims 1 to 13, wherein, after initial configuration, said femto radio base station (1) passively localizes and/or identifies terminals within its transmission range, in particular by way of packet position modulation, and/or.
wherein, after initial configuration, said femto radio base station (1) employs a terminal within its transmission range as a proxy for implicit signaling with other radio base stations.

15. Method according to any of claims 1 to 14, wherein said configuration server (3) recommends a suitable location for positioning said femto radio base station (1).

## Patentansprüche

1. Verfahren zur Konfigurierung einer Femto-Funkbasisstation, umfassend:
Errichten einer Verbindung der Femto-Funkbasisstation (1) zu einem Konfigurationsserver (3) über das Internet,
Positionieren eines mobilen Terminals (6) innerhalb der Übertragungsreichweite der Femto-Funkbasisstation (1),
das mobile Terminal (6) kontaktiert den Konfigurationsserver (3) über eine vorhandene Makro-Basisstation (7) und führt verschiedene Messungen durch, um die Funkumgebung am Standort der Femto-Funkbasisstation (1) zu identifizieren, und
der Konfigurationsserver (3) verwendet die Ergebnisse der Messungen, um eine Funkkonfiguration für die Femto-Funkbasisstation (1) zu bestimmen,
**dadurch gekennzeichnet, dass** die Femto-Funkbasisstation (1) den Verkehr zwischen dem mobilen Terminal (6) und der Makro-Basisstation (7) mittels ihrer Uplink-Funkschnittstelle passiv detektiert, den Konfigurationsserver (3) entsprechend informiert und das mobile Terminal (6) durch Detektieren und Analysieren der zwischen dem mobilen Terminal (6) und der Makro-Basisstation (7) ausgetauschten Signalisierungsinformation identifiziert.

2. Verfahren nach Anspruch 1, wobei die Femto-Funkbasisstation (1) die in Verbindung mit der Auslieferung der Femto-Funkbasisstation (1) an einen Nutzer bereitgestellte Adress- und Sicherheitsinformation verwendet, wenn sie sich mit dem Konfigurationsserver (3) verbindet.

3. Verfahren nach Anspruch 1 oder 2, wobei das mobile Terminal (6) an eine festgelegte Nummer oder zu einer festgelegten Adresse einen Telefonanruf tätigt oder eine Datenverbindung initiiert.

4. Verfahren nach einem der Ansprüche 1 bis 3, wobei in Verbindung mit der Auslieferung der Femto-Funkbasisstation (1) an einen Nutzer eine Identifikation des mobilen Terminals (6) bereitgestellt wird, die dem Konfigurationsserver (3) während der Initiierung der Verbindung zwischen dem mobilen Terminal (6) und der Makro-Basisstation (7) bereitgestellt wird.

5. Verfahren nach einem der Ansprüche 1 bis 4, wobei spezifische Verkehrs-/Signalisierungsmuster an der Uplink- und/oder Downlink-Funkschnittstelle zwischen dem mobilen Terminal (6) und der Makro-Basisstation (7) erzeugt werden.

6. Verfahren nach Anspruch 5, wobei spezifische Verkehrs-/Signalisierungsmuster an das mobile Terminal (6) gesendete Paging-Nachrichten, Handover-Muster und/oder in Form von aktiven und ungenutzten ("idle") Übertragungsperioden generierte Muster umfassen.

7. Verfahren nach einem der Ansprüche 1 bis 6, wobei Informationen über die Identität des mobilen Terminals (6) an den Konfigurationsserver (3) gesendet werden.

8. Verfahren nach einem der Ansprüche 1 bis 7, wobei die Messungen, die von dem mobilen Terminal (6) durchgeführt werden, um die Funkumgebung an dem Standort der Femto-Funkbasisstation (1) zu identifizieren, das Suchen nach Nachbarzellen, das Ausführen von Handover zu unterschiedlichen verfügbaren Funkzellen, das Scannen des Funkfrequenzspektrums und/oder das Ausführen einer Standortbestimmung umfassen.

9. Verfahren nach einem der Ansprüche 1 bis 8, wobei der Konfigurationsserver (3) Informationen darüber verwendet, welche anderen Femto-Funkbasisstationen in dem Gebiet lokalisiert sind, und wobei der Konfigurationsserver (3) derartige andere Femto-Funkbasisstationen anweist, Messungen an den Signalen von dem mobilen Terminal (6) vorzunehmen.

10. Verfahren nach einem der Ansprüche 1 bis 9, wobei der Konfigurationsserver (3) basierend auf Informationen von den Messungen betreffend ungenutztes Spektrum und/oder basierend auf Informationen über die Netzwerkplanung des Betreibers eine geeignete Funkkonfiguration für die Femto-Funkbasisstation (1) festlegt.

11. Verfahren nach Anspruch 10, wobei die Funkkonfiguration zusammen mit der Autorisierung, die Downlink-Schnittstelle zu nutzen, an die Femto-Funkbasisstation (1) übertragen wird.

12. Verfahren nach Anspruch 11, wobei nach Inbetriebsetzung der Downlink-Schnittstelle der Femto-Funkbasisstation (1) eine Testverbindung mit dem mobilen Terminal (6) errichtet wird.

13. Verfahren nach einem der Ansprüche 1 bis 12, wobei, nach der anfänglichen Konfiguration, die Messungen während der Betriebsphase der Femto-Funkbasisstation (1) fortgesetzt werden.

14. Verfahren nach einem der Ansprüche 1 bis 13, wobei die Femto-Funkbasisstation (1), nach der anfänglichen Konfiguration, Terminals innerhalb ihrer Übertragungsreichweite lokalisiert und/oder identifiziert, insbesondere durch Paketpositionsmodulation, und/oder
wobei die Femto-Funkbasisstation (1), nach der anfänglichen Konfiguration, ein Terminal innerhalb ihrer Übertragungsreichweite als ein Proxy für eine implizite Signalisierung mit anderen Funkbasisstationen verwendet.

15. Verfahren nach einem der Ansprüche 1 bis 14, wobei der Konfigurationsserver (3) einen geeigneten Standort zur Positionierung der Femto-Funkbasisstation (1) empfiehlt.

## Revendications

1. Procédé de configuration d'une station de base radio femtocellulaire, comprenant les étapes ci-dessous consistant à :
établir une connexion de ladite station de base radio femtocellulaire (1) à un serveur de configuration (3) par l'intermédiaire d'Internet ;
positionner un terminal mobile (6) dans la portée de transmission de ladite station de base radio femtocellulaire (1) ;
ledit terminal mobile (6) contactant ledit serveur de configuration (1) sur une macrostation de base existante (7) et mettant en oeuvre diverses mesures en vue d'identifier l'environnement radioélectrique sur le site de ladite station de base radio femtocellulaire (1) ; et
ledit serveur de configuration (3) utilisant les résultats desdites mesures en vue de déterminer une configuration radio pour ladite station de base radio femtocellulaire (1) ;
**caractérisé en ce que** ladite station de base radio femtocellulaire (1) détecte de façon passive le trafic entre ledit terminal mobile (6) et ladite macrostation de base (7) au moyen de son interface radio de liaison montante, informe ledit serveur de configuration (3) en conséquence, et identifie ledit terminal mobile (6) au moyen de la détection et de l'analyse d'informations de signalisation échangées entre ledit terminal mobile (6) et ladite macrostation de base (7).

2. Procédé selon la revendication 1, dans lequel ladite station de base radio femtocellulaire (1), lors de la connexion audit serveur de configuration (3), emploie des informations d'adresse et de sécurité fournies dans le cadre de la fourniture de ladite station de base radio femtocellulaire (1) à un utilisateur.

3. Procédé selon la revendication 1 ou 2, dans lequel ledit terminal mobile (6) effectue un appel téléphonique ou initie une connexion de données à une adresse spécifiée ou à un numéro spécifié.

4. Procédé selon l'une quelconque des revendications 1 à 3, dans lequel, dans le cadre de la fourniture de ladite station de base radio femtocellulaire (1) à un utilisateur, une identification dudit terminal mobile (6) est fournie, laquelle est fournie audit serveur de configuration (3) lors de l'initiation de la connexion entre ledit terminal mobile (6) et ladite macrostation de base (7).

5. Procédé selon l'une quelconque des revendications 1 à 4, dans lequel des motifs de trafic / de signalisation spécifiques sont générés sur l'interface radio de liaison montante et/ou de liaison descendante entre ledit terminal mobile (6) et ladite macrostation de base (7).

6. Procédé selon la revendication 5, dans lequel lesdits motifs de trafic / de signalisation spécifiques incluent des messages de radiomessagerie envoyés audit terminal mobile (6), des motifs de transfert intercellulaire, et/ou des motifs générés en termes de périodes de transmission actives et au repos.

7. Procédé selon l'une quelconque des revendications 1 à 6, dans lequel des informations sur l'identité dudit terminal mobile (6) sont envoyées audit serveur de configuration (3).

8. Procédé selon l'une quelconque des revendications 1 à 7, dans lequel lesdites mesures mises en oeuvre par ledit terminal mobile (6) en vue d'identifier l'environnement radioélectrique sur le site de ladite station de base radio femtocellulaire (1) incluent la recherche de cellules voisines, la mise en oeuvre de transferts intercellulaires vers différentes cellules radio disponibles, le balayage du spectre de fréquences radioélectriques, et/ou la mise en oeuvre d'une détermination d'emplacement.

9. Procédé selon l'une quelconque des revendications 1 à 8, dans lequel ledit serveur de configuration (3) utilise des informations indiquant quelles autres stations de base radio femtocellulaires sont situées dans la zone, et dans lequel ledit serveur de configuration (3) ordonne aux autres stations de base radio femtocellulaires de mettre en oeuvre des mesures sur les signaux en provenance dudit terminal mobile (6).

10. Procédé selon l'une quelconque des revendications 1 à 9, dans lequel ledit serveur de configuration (3) détermine une configuration radio appropriée pour ladite station de base radio femtocellulaire (1), sur la base d'informations issues desdites mesures concernant un spectre non utilisé et/ou sur la base d'informations sur la planification de réseau de l'opérateur.

11. Procédé selon la revendication 10, dans lequel ladite configuration radio est transférée à ladite station de base radio femtocellulaire (1) conjointement avec l'autorisation de déployer l'interface de liaison descendante.

12. Procédé selon la revendication 11, dans lequel, suite à l'activation de ladite interface de liaison descendante de la station de base radio femtocellulaire (1), une connexion de test est établie avec ledit terminal mobile (6).

13. Procédé selon l'une quelconque des revendications 1 à 12, dans lequel, après une configuration initiale, lesdites mesures sont maintenues pendant la phase de fonctionnement de ladite station de base radio femtocellulaire (1).

14. Procédé selon l'une quelconque des revendications 1 à 13, dans lequel, après la configuration initiale, ladite station de base radio femtocellulaire (1) localise et/ou identifie de manière passive les terminaux situés à sa portée de transmission, en particulier par l'intermédiaire d'une modulation de position de paquets, et/ou ;
dans lequel, après la configuration initiale, ladite station de base radio femtocellulaire (1) emploie un terminal dans sa portée de transmission en qualité de terminal mandataire en vue de la signalisation implicite avec d'autres stations de base radio.

15. Procédé selon l'une quelconque des revendications 1 à 14, dans lequel ledit serveur de configuration (3) recommande un emplacement approprié en vue du positionnement de ladite station de base radio femtocellulaire (1).
